# EUROPEAN PATENT SPECIFICATION

(11) **EP 1 047 087 B1**
(45) Date of publication and mention of the grant of the patent: **23.11.2005**
(21) Application number: 00202732.4
(22) Date of filing: 10.06.1994
(51) Int. Cl.: H01G 9/21

(54) **Method of manufacturing solid state capacitors**
Herstellungsverfahren von Festelektrolytkondensatoren
Méthode de fabrication de condensateurs à électrolyte solide

(43) Date of publication of application: 25.10.2000
(62) Divisional of application: 98306117.7
(73) Proprietor: AVX CORPORATION, New York, NY 10022 (US)
(72) Inventor: Salisbury, Ian, S Devon TO4 6JY (GB)
(74) Representative: Brown, Fraser Gregory James

(56) References cited:
- US-A- 3 787 961
- US-A- 4 188 706
- US-A- 4 599 788
- PATENT ABSTRACTS OF JAPAN vol. 017, no. 091 (E-1324), 23 February 1993 (1993-02-23) & JP 04 284617 A (NIPPON CHEMICON CORP), 9 October 1992 (1992-10-09)
- PATENT ABSTRACTS OF JAPAN vol. 007, no. 115 (E-176), 19 May 1983 (1983-05-19) & JP 58 034951 A (SHIN NIPPON DENKI KK), 1 March 1983 (1983-03-01)

## Description

### BACKGROUND AND FIELD OF THE INVENTION

The present invention is in the field of solid state capacitors and is directed more particularly to a mass production method for manufacturing surface mountable solid state capacitors.

### DEFINITIONS

As employed herein the term solid state capacitor is intended to mean a capacitor formed by the method of providing a powdered mass of solid state capacitor forming material (as hereinafter defined), compressing the mass to form a predetermined shape, sintering the compressed mass to integrate the mass into a unitary porous state, chemically reacting, eg by anodising the porous mass to form a dielectric coating over the surfaces within the mass, and thereafter forming a conductive coating over the dielectric coating (manganising).

In the solid state capacitor the components which have been anodised define the anode of the capacitor and the conductive or manganised coating over the dielectric forms the cathode or counter electrode.

The term solid state forming materials, as used herein, are defined.as materials useful in the fabrication of solid state capacitors. Solid state forming materials include one or more of the following: tantalum, niobium, molybdenum, silicon, aluminium, titanium, tungsten, zirconium, and alloys of the above. The principal solid state metals currently in use are tantalum and to a lesser degree niobium.

Anodizing, as this term is used in the present application, is intended to mean the formation on the spongy surfaces throughout the porous sintered mass of solid state forming material a dielectric coating, typically by immersing the sintered solid state forming material in an electrolyte, e.g. a phosphoric acid solution, while the solid state forming material is connected to a positive source of DC current as respects a cathode immersed in the bath.

The term manganizing is intended to refer generically to the step of forming a conductive counter electrode coating over the dielectric resulting from anodizing. The manganizing step is typically performed by dipping the anodized device in a solution of manganous nitrate and heating the impregnated device in a moist atmosphere to convert the nitrate to a solid conductive manganese dioxide.

Both the anodizing and manganizing steps are well known in the art of forming solid state capacitors and may vary in accordance with the solid state material employed, and the intended end characteristics of the capacitor.

### PRIOR ART

Solid state capacitors are valued due in large measure to the fact that extremely high capacitances may be provided in a relatively limited volumetric space as a result of the large surface area within the sintered porous mass. It is, for example, feasible to provide a tantalum capacitor having a value of 50 to 100 MFD at working voltages of about 10 volts in a capacitor body having a volume of .027cc.

Heretofore, much of the benefit of compactness was compromised as a result of the necessarily large encapsulation methods employed. More particularly, an appreciation of the advance of the instant invention may best be derived by reference to the conventional mode of fabricating commercially available solid state capacitors.

In such manufacture, the end of a rod of tantalum metal is applied to a mass of compressed tantalum powder. The rod is bonded to the tantalum powder mass by co-sintering the rod and powder or by welding the rod to a pre-sintered mass of the powder. Thereafter, the prefabricated units are anodizing and manganized, such procedures being typically carried out by gripping the tantalum rods and utilizing such rods as a "handle" for the succeeding steps.

The capacitor implants must now be packaged in a manner enabling their use in commercial applications. Due in large measure to the fragility of the bond between the anode rod and tantalum mass, it is necessary typically to encase the capacitor in a lead frame construction having terminations permitting attachment to a PC board or the like. Typically, lead frame attachment involves effecting a cathode connection to the body of the capacitor and effecting welds between the anode rod and other portions of the lead frame, encapsulating the device while still connected to the lead frame, and thereafter severing connections between projecting portions of the lead frame and remainder thereof to provide the finished capacitor.

As is well known to those skilled in the art, the described conventional solid state capacitor manufacturing techniques are replete with manufacturing difficulties and result in a finished capacitor package, the volume of which is several times the volume of the actual capacitance generating components. As noted, the connection between anode rod and capacitor body is fragile and great care must be taken during processing of the capacitor preforms during the anodizing, manganizing, and subsequent steps.

Additionally, welding of solid state metals, as is necessary in conventional manufacture, is a difficult procedure.

In the described conventional process great care must be taken to assure that the cathode coating does not short to the anode rod and the necessity of spacing these components further increases the overall size of the component.

Finally, and perhaps most importantly, in addition to the expense of lead frame fabrication, the large volumetric space occupied by the finished capacitor is counter-indicated in modern manufacturing procedures wherein miniaturization is at a premium.

Representative examples of conventional solid state tantalum capacitors and their method of manufacture are described and illustrated in U.S. patents **4,059,887**; **4,520,430; 4,780,796 and 4,945,452.**

Representative examples of solid state capacitors manufactured utilizing the lead frame method include U.S. patents **4,107,762; 4,539,623; 4,660,127; 4,899,258 and 4,907,131.**

Listed below are U.S. patents references located in connection with a search of the art conducted in respect of the instant invention.

**3,117,365** discloses ceramic capacitors formed by depositing U-shaped electrode patterns on a large sheet of dielectric, stacking the sheets such that the bases of the U's exit from opposite surfaces of the stack and thereafter cutting to define individual capacitors which are then terminated.

**3,538,571** discloses green ceramic sheets embossed to provide discrete raised areas which are thereafter electroded.

**3,617,834** relates to a ceramic multilayer capacitor formed by providing a block of capacitors with overlapping edges and severing the block in the areas of overlap to provide termination areas.

**3,635,759** discloses forming multilayer ceramic capacitors by applying ceramic in binder onto a porous screen, applying suction, depositing liquid metal and repeating this operation until a multilayer structure is formed, which is thereafter fired and cut to form individual capacitors.

**3,992,761** discloses a method of terminating capacitors by embedding a multiplicity of ceramic capacitors in a block of plastic with the ends exposed. Terminations are applied to the exposed ends and the block is thereafter dissolved to removed the capacitor bodies therefrom.

**4,045,867** relates to a method of molding polymer compound about capacitors involving passing termination wires upwardly through holes in the bottom of plastic preforms, attaching the wires to the capacitor, introducing the capacitors into the preforms, filling the preforms with resin and curing.

**4,574,438** shows a pressure sensitive transducer made by forming a metallic layer on a substrate, forming a piezo electric dielectric layer over the metal, cutting grooves through the dielectric and metal and into the body of the substrate, filling the grooves with plastic, forming photolithographic spacers over portions of the device in registry with the filled grooves and finally applying a cover having electrodes directed normal to the grooves.

**4,959,652** shows formation of surface mountable capacitors of the metalized plastic type made by winding individual capacitors, coating the terminations by vapor deposition using a metal having a higher melt point than the solder which will be used to attach the capacitor to a PC board, coating the capacitor with resin and then grinding away portions of the resin to expose desired parts of the underlying metal termination material.

**US 378,7961** discloses a method of manufacturing solid state capacitors in which a solderable metal substrate is provided with a layer of a film forming metal such as tantalum, titanium, aluminium or niobium. The film forming material layer is etched to leave a pair of discrete islands of the film forming metal. The islands form anode electrodes and are oxidized to create dielectric layers. A metal oxide semiconductor layer is then formed on the oxide layer. The cathode layer is then formed on top by spraying a graphite suspension or by means of eletro-conductive paint or other known metalization techniques. The substrate may then be divided to form individual capacitors.

**US 459,9788** discloses a method for manufacturing solid state electrolytic capacitors. Valve metal pads are screen printed onto a valve metal substrate and subsequently multiple valve metal pellets formed from high surface area powder are applied to the screen printed pads. The substrate and pellets are then sintered in order to bond the pellets to the substrate via the screen printed pads.

### SUMMARY OF THE INVENTION

The present invention may be summarized as directed to an improved method of manufacturing simultaneously a multiplicity of surface mountable solid state capacitors.

According to the present invention, there is provided a method as defined by the features of claim 1. Briefly stated, the preferred method is set out below and involves providing a substrate preferably comprised of the same material as, or a material compatible with, the solid state forming material from which the capacitor will be formed. A compressed wafer of powdered solid state forming material is mounted on the substrate, the wafer being of a size many times larger than the size of the individual capacitors. The wafer and substrate are co-sintered to bond the wafer to the substrate and to integrate the powder into a porous mass.

The sintered wafer is divided into a multiplicity of sub-units by cuts formed through the wafer and perpendicular to the substrate. Either before or after the sub-division the wafer and/or sub-divided units are anodized and manganized, it being understood that if the anodizing and manganizing procedures are carried out prior to sub-division, the anodizing and manganizing steps are again repeated after sub-division. The areas between the discrete sub-units are treated, preferably by a resin injection step, so as to isolate the interface between the substrate and wafer from other areas of the wafer so that the manganizing steps do not short circuit the substrate, which will form the anode of the device, with the cathode of the capacitor.

A member, such as a metal plate, is applied to the upper surface of the processed wafer in mechanical and electrical contact with such upper surface to form a counter electrode plate. The void areas between the discrete capacitors formed as a result of the cutting step or steps previously performed are now filled by injecting resin into the space defined between the substrate and counter electrode plate which act in the manner of components of a mold whereby the entirety of the spaces defined by the cuts are filled with insulating resin material.

Finally, the composite is cut along cutting lines which register with the previously formed cuts, i.e. through the counter electrode plate, the resin separating the individual capacitors, and the substrate, whereby there are formed finished capacitors which are already encapsulated except at the ends defined by the counter electrode plate and the substrate, which components define the terminations of the capacitor permitting attachment of the capacitor as a surface mount on the PC board, the substrate forming the anode and the counter electrode the cathode of the capacitor.

As will be appreciated by skilled workers in the art familiar with conventional solid state capacitors and their methods of manufacture, numerous advantages flow from the manufacturing method generally described.

Firstly, by eliminating the conventional anode wire, the volumetric efficiency of the capacitor, i.e. the capacitance obtained within a particular volume of unit is increased by a factor to two to three times.

Additionally, major manufacturing difficulties such as handling the preform using an anode wire and welding of the anode wire, as well as the necessity for employing lead frames are completely eliminated. The method further eliminates the industry wide problem of a short circuiting between the anode wire and the cathode coating covering conventional solid state capacitors.

An important advantage of the invention resides in the ability of providing as a stock item a substrate with a sintered solid state forming material wafer bonded thereto. This item may be tailored to form capacitors of desired capacitance by simply varying the spacing of cuts formed in the wafer and, hence, capacitor size.

Importantly, the costs of encapsulation are significantly reduced by virtue of the utilization of the counter electrode plate and substrate in effect as boundaries of a gang mold for injection of insulating resin which separates the individual capacitors and, after sawing, forms the final encapsulation of the finished capacitor.

It is accordingly an object of the invention to provide a novel method for the mass manufacture of surface mountable solid state capacitors.

A further object of the invention is the provision of a method of manufacturing surface mountable solid state capacitors wherein elements of the encapsulating materials of the finished capacitors perform a function during the manufacturing process, namely isolating the anode-substrate from the subsequently formed counter electrode components of the capacitor.

A still further object of the invention is the provision of a method of manufacturing solid state capacitors and resulting capacitor which eliminates the prior art problem of a fragile connection between anode rod and tantalum mass, and between anode rod and termination component so as to provide a durable and reliable structure.

### BRIEF DESCRIPTION OF DRAWINGS

Referring now to the drawings Figs. 1 through 9 are schematic sectional views illustrating the sequential steps of manufacturing a capacitor in accordance with a first embodiment of the invention.

Fig. 3a is a perspective view of a sub-assembly shown at the stage of Fig. 3.

Fig. 10 is an enlarged fragmentary perspective view of a finished capacitor in accordance with the invention made by the method of Figs. 1 through 9.

Figs. 11 through 19 are schematic sectional views depicting a variation of the method at progressive stages.

Fig. 20 is an enlarged fragmentary perspective view of a finished capacitor made in accordance with the method of Figs. 11 through 19.

### DETAILED DESCRIPTION OF THE DRAWINGS

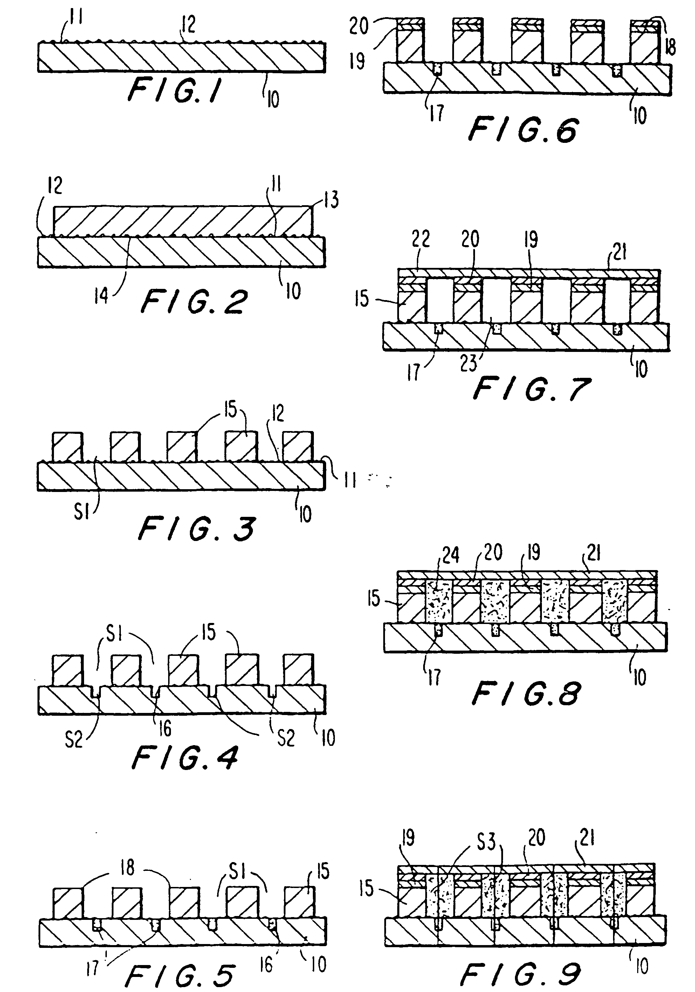

Referring now to the drawings, there is disclosed in Figs.1 through 9 a sequential series of sectional views illustrating various steps of manufacturing capacitors in accordance with the invention in accordance with a first embodiment thereof.

As will be evident to those skilled in the art the dimensions and proportions of the various elements have been exaggerated for purposes of clarity.

In Fig. 1 there is disclosed a substrate 10 of solid state forming material illustratively the metal tantalum. To the upper surface 11 of substrate 10 there is preferably applied a thin layer of tantalum grains 12, which are fused to the substrate, the grains 12 functioning to provide a roughened surface to augment bonding of the wafer 13 as will be described hereinbelow. As an alternate to the grains 12 the surface 11 may be roughened.

To the upper surface 11 of substrate 10 there is applied a wafer 13 comprised of compressed tantalum powder admixed with binder to form a coherent masss. As is known in the art, the particles defining the powder forming wafer 13 may vary in size ranges and such grain size will determine the eventual characteristics of the resultant capacitors. The wafer 13 and substrate 10 are thereafter co-sintered to initially burn-off the organic binders and thereafter to convert the powder of wafer 13 into an integral porous mass. The sintering also bonds the lower surface 14 to the upper surface 11 of substrate 10 mechanically and electrically connecting the touching surfaces.

By way of illustration and without limitation, the substrate may vary within a optimal range of 0,127 mm to 0,762 mm (.005 to .03 inches) in thickness. The seeding powder 12 employs grains larger that the wafer powder and may vary in accordance with the powder size employed in the wafer 13 and by way of illustration may optimally be in the range of from about 100 to 800 microns.

By further way of example and assuming that the substrate and powder are comprised of tantalum, a sintering at 2000 degrees C for period of from 5 to 60 minutes will be effective to create the desired bonding and porosity, the time factor being a function of particle size and mass of material forming the wafer. The processing of solid state capacitor forming materials including the formation of pellets, sintering steps and further processing steps (anodizing and manganizing) necessary to convert the porous mass into a capacitor are all well known in the art and the description thereof will be included herein only briefly, since such processing steps do not form a part of the instant invention.

The substrate 10 and sintered wafer 13, as illustrated in Fig. 2, is next subjected to sawing steps by cuts effected perpendicular to the plane of substrate 10 in a crisscross pattern (see Fig. 3a) to divide the wafer 13 into a multiplicity of discrete capacitor forming units 15. The cuts are preferably effected to a depth to expose the surface 11 of substrate 10 or slightly to penetrate the surface. Optionally, as a means for facilitating handling of the composite comprised of the substrate 10 and wafer 13, the substrate may be embedded in a block of resin (not shown) to a depth which exposes the upper surface and wafer.

The subdivided composite article of Figs. 3 and 3a is thereafter subjected to processing steps to convert the porous sintered mass of the wafer remaining after the sawing steps into capacitors. The processing steps are well known in the art and comprise an anodizing step, wherein the wafer is immersed in an electrolyte bath, i.e. a .1% phosphoric acid solution, while connecting the substrate to a positive source of DC current as respects a cathode immersed in the bath. This procedure results in the conversion of the portions of the wafer exposed to the solution, as well as the exposed portions of the substrate into a dielectric material, illustratively where the metal employed is tantalum to tantalum pentoxide.

The capacitor forming procedure includes subsequent formation of a counter electrode, the counter electrode forming step being effected, for example, by dipping the composite article in solution of manganous nitrate, thereafter heating the device in a moist atmosphere to about 325 degrees C to convert the nitrate to conductive manganese dioxide. The process of anodizing and manganizing may be repeated a multiplicity of times as is conventional to assure formation of a desired dielectric and over coating of counter electrode, it being understood that repetition is required due to ruptures or breaks in the dielectric which may be formed as a result of heating during fabrication of the counter electrode, such ruptures or breaks being necessarily re-anodized to assure non-shorting between the anode (defined by the tantalum metal) and the cathode or counter electrode (defined by the manganizing process).

The steps of treating the porous tantalum mass to form a capacitor are described in detail in **U.S. patents 4,059,887 and 4,945,452.**

As shown in Fig. 4 a second series of saw cuts S2 is formed in alignment with the first series of saw cuts S1, the saw cuts S2 penetrating more deeply into the substrate and defining channels 16 therein. At this point, it should be noted that the sequence of treating the material of the wafer by anodizing and manganizing is not critical to the invention. For example, it is feasible to anodize and manganize the entire wafer 13 before effecting saw cuts S1 and S2 or to effect saw cuts before treatment of the wafer. Of course, if anodizing is effected before cutting, it will be necessary to re-treat the saw cut composite by again anodizing and manganizing. The sequence of treatment is best determined by trial and error and is dependent upon such factors as the size of the individual capacitors, the nature (particle size) of the solid state forming material powder selected and the like as well known in the art.

As shown in Fig. 5 the channels 16 have been filled to the level of the surface 11 or slightly thereabove with resinous insulating composition 17. While optimally, the resin employed may be a liquid epoxy, any of a wide variety of liquid resins which subsequently harden may be employed.

Desirably, following formation of the second saw cuts S2 and in advance of filling the channels, the device is subjected to a further anodizing step to provide a anodizing insulative layer over the metal exposed by the saw cuts S2.

As will be apparent from the preceding description, the resin 17 (and the post saw cut anodizing step) have assured that the sole electrical connection between the metallic components of the sintered tantalum powder forming wafer 13 is at the surface 11 forming the interface between the discrete capacitor forming members 15 and the substrate.

As shown in Fig. 6, the upper surfaces 18 of the elements 15 have been provided, as is conventional, with a first layer 19 of conductive carbon and a covering layer 20 of silver thereby to effect electrical connection to exterior (upper) surface portions of the counter electrode formed by manganizing.

As shown in Fig. 7, a cathode plate 21 has been affixed, i.e. by a conductive adhesive, to the upper surface 22 of the silver coating 20. Following setting of the adhesive, the voids 23 defined by the initial saw cut S1 are filled with liquid insulating resin material (e.g. epoxy) and permitted to cure. Filling of the areas is greatly facilitated by the fact that the substrate 10 and cathode plate 21 together define a cell for containing injected resin.

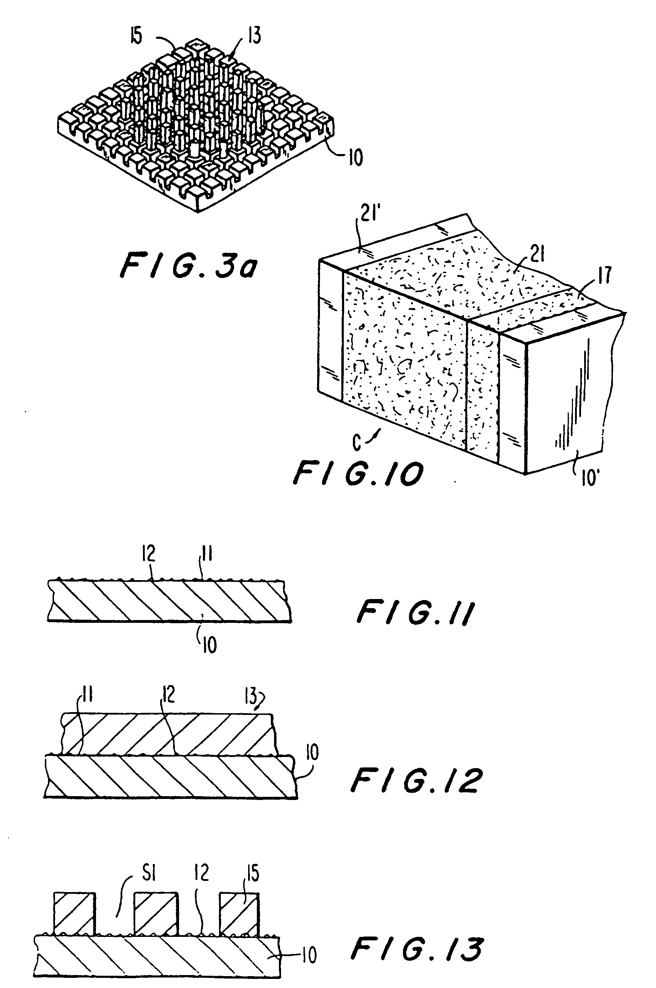

Finally, the composite unit illustrated in Fig. 8 is cut along saw lines S3 which register with saw lines S1 and S2, the sawing step resulting in the formation of finished capacitors C as illustrated in Fig. 10.

As will be apparent, no further processing or encapsulating are required, the saw cuts S3 defining finished encapsulated solid state capacitors. The capacitors are surface mountable, the anode 10' being comprised of a segment of substrate 10 and the cathode or counter electrode 21' being comprised of an increment of the cathode plate 21.

A significant advantage of this invention resides in the ability to fabricate preforms (Fig.2) comprised of a stock size of substrate and wafer 13. It is possible by merely varying the spacing of the saw cuts to produce capacitors of a variety of end characteristics in accordance with the requirements of a particular user.

Without limitation, and in compliance with the best mode requirements, a preferred manufacturing sequence for the practice of the method of Figs. 1 through 9 is as follows:

### SEQUENCE OF MANUFACTURE

1. Provide tantalum substrate.
2. Apply tantalum grains and heat to bond grains to substrate.
3. Apply and sinter tantalum wafer to integrate powder and bond to substrate and thereafter anodize.
4. Manganize.
5. Saw wafer (S1).
6. Form dielectric over saw cuts.
7. Add first resin barrier (17).
8. Manganize.
9. Apply carbon coat.
10. Apply silver coat.
11. Bond cathode plate using conductive adhesive.
12. Inject second resin encapsulation (24).
13. Cut wafer into discrete capacitors.

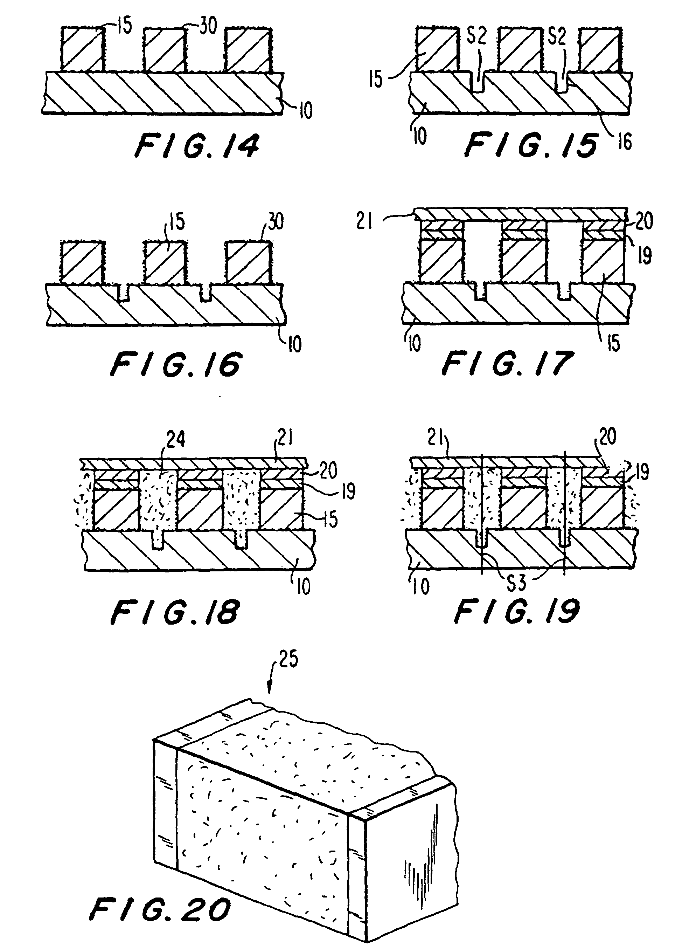

Illustrated in Figs. 11 through 19 is a modification of the method described in conjunction with Figs. 1 through 9. The primary distinction between the methods resides in the elimination of the first resin infusing step which results in the addition of resin components 17.

In the description of the procedures as illustrated in Figs.11 through 19, like parts have been given like reference numerals to those used in respect of the description of Figs. 1-9.

In accordance with the embodiment (Figs. 11-19), following formation of the first saw cut (S1) the capacitor sub-components 15 and exposed surfaces of the substrate 10 are provided with a dielectric coating 30 to seal any exposed metallic components exposed by the saw cuts and, thus, provide an insulating barrier protecting the boundary between substrate and base of members 15. The device is thereafter manganized following which a second series of narrower saw cuts (S2) are formed in registry with saw cuts S1. Thereafter, the composite is subjected to a further dielectric forming step to assure that the edges exposed by saw cuts S2 are sealed by the dielectric coating (Fig.16). The composite is thereafter manganized to define a counter electrode and processed as before, i.e. by the application of carbon layer 19, silver layer 20 and application of cathode plate 21. The voids between the capacitor members 15 are thereafter filled with resin insulating mass 24 as before and are sawed along the saw lines S3 to define the finished capacitor 25, illustrated in Fig. 20.

As with the method as described with respect to Figs. 1 through 9 the sequence of steps may be varied to a degree. With regard to the embodiment of Figs. 11 through 19 a preferred sequence is as follows:

### SEQUENCE OF MANUFACTURE (Figs. 11 through 19)

1. Roughen or sinter metal particles to substrate.
2. Mount wafer and co-sinter wafer and substrate.
3. Form dielectric.
4. Saw to level of substrate (S1).
5. Further dielectric formation to seal metal exposed by saw.
6. Manganize.
7. Form deep cuts (S2) into substrate.
8. Re-anodize to form dielectric in grooves defined by S2 sawing step.
9. Manganize.
10. Apply carbon and silver to upper edges of capacitors.
11. Attach cathode plate to silver surfaces using conductive adhesive.
12. Inject resin.
13. Separate individual capacitors by saw cuts (S3).

As will be apparent from the preceding description, there is disclosed herein novel methods of forming solid state capacitors. Common to the methods of the invention is the provision between a cathode plate and an anode plate of a multiplicity of solid state capacitors separated by void areas, the voids being filled with insulating-encapsulating resin, the individual capacitors being separated from the matrix only after the capacitors have been completely formed and encapsulated. The final sawing step results in the provision of surface mountable capacitors which are fully encapsulated and terminated, the severed edges of the substrate defining the anode termination and the edges of the cathode plate defining the counter electrode or cathode termination.

The capacitor resulting from practice of the process represents a highly efficient use of space providing a package whose volume is only about a third of the volume of conventional solid state capacitors. Unlike such conventional capacitors which are subject to failure based on dislodgement of the anode rod from the sintered pellet and also as a result of fracture of the anode rod connection to the termination, the capacitor of the present invention is virtually failure proof.

The manufacturing methods are further unique in that the resin components in addition to functioning as encapsulation of the finished capacitor function in addition as a means for facilitating the manufacturing procedure by forming isolations of the anode from the counter electrode (Method 1) and in accordance with both described variations, rigidify the matrix during the final sawing operations.

## Claims

1. A method of manufacturing solid state capacitors comprising the steps of providing a substrate (10), mounting on said substrate a wafer (13) of powdered solid state capacitor forming material having a lower surface (14), engaging said substrate (10) and an upper surface parallel to and spaced from said substrate, sintering said substrate (10) and wafer (13) to bond said lower surface (14) of said wafer to said substrate and integrate the powder of said wafer into a porous mass, dividing said wafer (13) into a plurality of discrete units (15) separated by channels or voids (23) by forming a first series of cuts (S1) through said wafer in planes perpendicular to said substrate (10), subjecting said divided wafer to an anodizing step to form a dielectric coating (30) throughout said porous mass, forming a counter-electrode coating (20) over said dielectric coating, applying a counter-electrode plate (21) to the upper surface of the processed wafer, the plate being in mechanical and electrical contact with said upper surface, filling said channels or voids (23) with insulating material (24), and the further step of separating individual capacitors by cuts (S3) formed through said substrate (10), counter-electrode plate (21) and insulating material (24).

2. A method as claimed in claim 1 comprising injecting liquid insulative resin (24) into said channels or voids (23) utilising said substrate and plate (10, 21) as boundaries of a mold, causing said resin to harden, and thereafter severing (S3) said plates and resin along lines coincident with said channels.

## Patentansprüche

1. Verfahren zum Herstellen von Festkörper-Kondensatoren, das die folgenden Schritte umfasst: Vorsehen eines Substrats (10), Anbringen eines eine untere Oberfläche (14) aufweisenden Wafers (13) aus einem pulverisierten Material für die Bildung eines Festkörper-Kondensators auf dem Substrat, Schaffen eines Eingriffs zwischen dem Substrat (10) und einer oberen Oberfläche, die zu dem Substrat parallel und hiervon beabstandet ist, Sintern des Substrats (10) und des Wafers (13), um die untere Oberfläche (14) des Wafers mit dem Substrat zu verbinden und um das Pulver des Wafers in eine poröse Masse zu integrieren, Unterteilen des Wafers (13) in mehrere diskrete Einheiten (15), die durch Kanäle oder Hohlräume (23) getrennt sind, indem eine erste Reihe von Schnitten (S1) durch den Wafer in zu dem Substrat (10) senkrechten Ebenen gebildet werden, Beaufschlagen des unterteilten Wafers mit einem Anodisierungsschritt, um eine dielektrische Beschichtung (30) über die gesamte poröse Masse zu bilden, Bilden einer Gegenelektroden-Beschichtung (20) auf der dielektrischen Beschichtung, Drücken einer Gegenelektroden-Platte (21) gegen die obere Oberfläche des bearbeiteten Wafers, wobei die Platte in mechanischem und elektrischem Kontakt mit der oberen Oberfläche ist, und Befüllen der Kanäle oder Hohlräume (23) mit einem Isoliermaterial (24), wobei das Verfahren den weiteren Schritt umfasst, bei dem einzelne Kondensatoren durch Schnitte (S3), die durch das Substrat (10), die Gegenelektrodenplatte (21) und das Isoliermaterial (24) gebildet werden, voneinander getrennt werden.

2. Verfahren nach Anspruch 1, das das Einspritzen von flüssigem Isolierharz (24) in die Kanäle oder Hohlräume (23) unter Verwendung des Substrats und der Platte (10, 21) als Begrenzungen einer Gießform, das Bewirken des Härtens des Harzes und danach des Trennens (S3) der Platten und des Harzes längs Linien, die mit den Kanälen übereinstimmen, umfasst.

## Revendications

1. Une méthode de fabrication de condensateurs à électrolyte solide comprenant les étapes consistant à créer un substrat (10), monter sur ledit substrat une plaquette (13) de matière en poudre de formation de condensateurs à électrolyte solide comprenant une surface inférieure (14) venant en contact avec ledit substrat (10) et une surface supérieure parallèle audit substrat et espacée de celui-ci, fritter ledit substrat (10) et ladite plaquette (13) pour relier ladite surface inférieure (14) de ladite plaquette audit substrat et intégrer la poudre de ladite plaquette en une masse poreuse, diviser ladite plaquette (13) en une pluralité d'unités discrètes (15) séparées par des canaux ou des vides (23) en formant une première série de découpes (S1) à travers ladite plaquette dans des plans perpendiculaires audit substrat (10), soumettre ladite plaquette divisée à une étape d'anodisation pour former un revêtement diélectrique (30) à travers toute ladite masse poreuse, réaliser un revêtement formant contre-électrode (20) sur ledit revêtement diélectrique, appliquer une plaque formant contre-électrode (21) sur la surface supérieure de la plaquette traitée, la plaque étant en contact mécanique et électrique avec ladite surface supérieure, remplir lesdits canaux ou lesdits vides (23) avec une matière isolante (24), et l'étape supplémentaire consistant à séparer des condensateurs individuels par des découpes (S3) réalisées à travers ledit substrat (10), ladite plaque formant contre-électrode (21) et ladite matière isolante.

2. Une méthode telle que revendiquée à la revendication 1 comprenant les étapes consistant à injecter une résine isolante liquide (24) dans lesdits canaux ou lesdits vides (23) en utilisant ledit substrat et ladite plaque (10, 21) en tant que surface extérieure d'un moule, amener ladite résine à durcir et, après cela, séparer (S3) lesdites plaques et ladite résine le long de lignes coincidant avec lesdits canaux.
